# FASCICULE DE BREVET EUROPEEN

(11) **EP 1 936 769 B1**
(45) Date de publication et mention de la délivrance du brevet: **21.01.2015**
(21) Numéro de dépôt: 07354057.7
(22) Date de dépôt: 10.10.2007
(51) Int. Cl.: H02H 3/04

(54) **Dispositif auxiliaire et procédé de report d'informations, ensemble auxiliaire et disjoncteur électrique comportant ledit dispositif**
Hilfsvorrichtung und Verfahren zur Angabe von Informationen, Hilfseinheit und elektrischer Schalter mit dieser Vorrichtung
Auxiliary device and method of reporting information, auxiliary assembly and circuit breaker including said device

(30) Priorité: 18.12.2006 FR 0611009
(43) Date de publication de la demande: 25.06.2008
(73) Titulaire: Schneider Electric Industries SAS, 92500 Rueil-Malmaison (FR)
(72) Inventeur: Chelloug, Mustapha, 38250 Grenoble Cédex 09 (FR)
(74) Mandataire: Péru, Laurence

(56) Documents cités:
- EP-A1- 0 591 074

## Description

### DOMAINE TECHNIQUE DE L'INVENTION

L'invention concerne un dispositif auxiliaire de report d'informations pour disjoncteur, ledit dispositif comportant des moyens de traitement comprenant :
- une première entrée pour recevoir, dans au moins une configuration, une première information représentative d'un état dudit disjoncteur, et
- au moins une sortie de commande pour commander le report d'une information.

L'invention concerne également, un ensemble auxiliaire d'un disjoncteur électrique comportant le dispositif auxiliaire de report d'informations.

L'invention concerne également un disjoncteur comportant ledit ensemble auxiliaire.

L'invention concerne enfin un procédé de report d'informations pour disjoncteur comportant :
- une étape de lecture, dans au moins une configuration, d'une première information représentative d'un état (O, F) dudit disjoncteur, et
- une étape de commande pour commander le report d'une information.

### ETAT DE LA TECHNIQUE

La demande de brevet EP 0 591 074 décrit un disjoncteur électrique comportant des blocs auxiliaires assurant des fonctions de signalisation et/ou de commande. L'un des blocs auxiliaires permet de réaliser un report d'une information représentative d'un état du disjoncteur, en particulier d'une information représentative de l'ouverture ou de la fermeture des contacts principaux du disjoncteur.

Les moyens de traitement des dispositifs auxiliaires de report d'information de l'art antérieur sont généralement initialisés grâce aux informations des signaux du déclencheur. Un tel processus n'est pas optimisé quant à sa fiabilité.

### EXPOSE DE L'INVENTION

L'invention vise à remédier aux inconvénients des procédés et dispositifs de l'art antérieur en proposant un dispositif auxiliaire de report d'informations dans lequel les moyens de traitement comportent :
- une deuxième entrée pour recevoir au moins une deuxième information représentative d'un défaut électrique ou d'une commande auxiliaire,
- des moyens d'identification connectés à la deuxième entrée pour identifier le défaut électrique dans la deuxième information, et
- des moyens d'initialisation de la au moins une sortie de commande pour commander, dans ladite configuration, le report de la première information représentative d'un état dudit disjoncteur en fonction de la première information et de la deuxième information.

De préférence, les moyens d'identification permettent d'identifier un défaut électrique choisi parmi :
- les défauts électriques générant l'ouverture de contacts principaux du disjoncteur, et/ou
- les défauts électriques ne générant pas l'ouverture des contacts principaux du disjoncteur.

Avantageusement, les défauts électriques générant l'ouverture de contacts principaux du disjoncteur comprennent les défauts de type thermique ou différentiel, les défauts du type thermique, et les défauts du type différentiel. Avantageusement, les défauts électriques ne générant pas l'ouverture de contacts principaux du disjoncteur comprennent toute variation de la fréquence par rapport à une référence, toute variation de tension par rapport à une référence, et toute défaillance dans la chaîne de mesure.

De préférence, les signaux porteurs de la deuxième information se présentent sous la forme d'une trame comportant une impulsion dont la durée est représentative des informations portées par lesdits signaux.

De préférence, les moyens de traitement comportent une entrée de configuration.

Avantageusement, dans une configuration de report de défaut avec initialisation par changement d'état du disjoncteur, les moyens de traitement permettent :
- la commande de report de la deuxième information, lorsque la deuxième information est représentative d'un défaut électrique correspondant à un défaut générant une ouverture des contacts principaux du disjoncteur, et
- l'initialisation de la au moins une sortie de commande, lorsque la première information est représentative d'une fermeture ultérieure des contacts principaux dudit disjoncteur.

Avantageusement, dans la configuration de report de défaut avec initialisation par changement d'état du disjoncteur, la deuxième information est représentative d'un défaut électrique du type thermique et/ou du type différentiel. De préférence, le dispositif auxiliaire comporte deux sorties de commande pour commander le report d'informations sur deux contacts statiques permettant de reporter distinctivement une information représentative d'un défaut électrique de type thermique et une information représentative d'un défaut électrique de type différentiel. De préférence, les moyens de traitement comportent des moyens de temporisation associés aux moyens d'initialisation pour autoriser l'initialisation lorsque le temps écoulé entre le report de la deuxième information et la fermeture des contacts principaux est inférieur à une durée de temporisation prédéterminée, par exemple comprise entre 300 et 700 ms.

Avantageusement, dans une configuration de report de défaut avec initialisation par l'intermédiaire du déclencheur dudit disjoncteur, les moyens de traitement permettent :
- la commande de report de la deuxième information, lorsque la deuxième information est représentative d'un défaut électrique, et
- l'initialisation de la au moins une sortie de commande, lorsque la deuxième information est représentative d'une commande auxiliaire d'initialisation.

Avantageusement, dans une configuration de commande auxiliaire d'un commutateur annexe, les moyens de traitement permettent :
- la commande de report de la deuxième information, lorsque la deuxième information est représentative d'une commande auxiliaire d'ouverture d'un commutateur annexe, et
- l'initialisation de la au moins une sortie de commande, lorsque la deuxième information est représentative d'une commande auxiliaire d'initialisation.

De préférence, dans la configuration de commande auxiliaire d'un commutateur annexe, la commande auxiliaire d'initialisation est temporisée. De préférence, le dispositif auxiliaire comporte des moyens de réglage de la temporisation de la commande auxiliaire d'ouverture d'un commutateur annexe. De préférence, la première entrée est connectée aux moyens de réglage pour recevoir une information représentative de la temporisation.

Selon un mode préférentiel, le dispositif auxiliaire comporte des moyens de couplage avec un déclencheur dudit disjoncteur pour recevoir des signaux porteurs de la deuxième information représentative d'un défaut électrique ou d'une commande auxiliaire, la deuxième entrée étant connectée aux dits moyens de couplage. De préférence, les moyens de couplage comporte un coupleur optique et des moyens de protection hermétique.

Selon un mode préférentiel, le dispositif auxiliaire comporte des moyens de commutation connectés à la au moins une sortie de commande pour commuter au moins un contact statique et pour reporter sur ledit contact au moins l'une desdites informations.

De préférence, le dispositif auxiliaire présente une forme standard pour être monté dans au moins un compartiment dudit disjoncteur.

L'invention concerne également un ensemble auxiliaire d'un disjoncteur électrique comportant :
- un dispositif auxiliaire tel que décrit précédemment, et
- des moyens de report d'état du disjoncteur séparés dudit dispositif auxiliaire et couplés à la première entrée de ce dernier.

De préférence, dans l'ensemble auxiliaire, les moyens de report d'état comportent un contact électrique actionné par un mécanisme du disjoncteur. Avantageusement, les moyens de report d'état du disjoncteur sont disposés dans un bloc de bornes électriques connectés aux contacts statiques dudit dispositif auxiliaire. De préférence, le bloc de bornes électriques présente une forme standard pour être monté dans au moins un compartiment dudit disjoncteur.

L'invention concerne également un disjoncteur électrique comportant un déclencheur électronique pour déclencher l'ouverture de contacts principaux dudit disjoncteur en réponse à au moins un type de défaut électrique, et un ensemble auxiliaire couplé audit déclencheur électronique, dans lequel ledit ensemble auxiliaire est tel que décrit précédemment, et dans lequel il est couplé au déclencheur par l'intermédiaire des moyens de couplage du dispositif auxiliaire de report d'information dudit ensemble auxiliaire.

L'invention concerne un procédé de report d'informations pour disjoncteur comportant :
- une étape de lecture, dans au moins une configuration, d'une première information représentative d'un état dudit disjoncteur, et
- une étape de commande pour commander le report d'une information.

Dans le procédé de l'invention, l'étape de traitement comporte :
- une étape de lecture pour recevoir au moins une deuxième information représentative d'un défaut électrique ou d'une commande auxiliaire,
- une étape d'identification pour identifier un défaut électrique (SD, SDT, SDV) dans la deuxième information, et
- une étape d'initialisation pour commander, dans ladite configuration, le report de la première information représentative d'un état dudit disjoncteur en fonction de la première information et de la deuxième information.

Avantageusement, dans la configuration de report de défaut avec initialisation par changement d'état du disjoncteur,
- lorsque la deuxième information est représentative d'un défaut électrique correspondant à un défaut générant une ouverture des contacts principaux du disjoncteur, une commande de report de la deuxième information est envoyée sur la sortie de commande, et
- lorsque la première information est représentative d'une fermeture ultérieure des contacts principaux dudit disjoncteur, ladite sortie de commande est initialisée.

Avantageusement, dans la configuration de report de défaut avec initialisation par changement d'état du disjoncteur, la deuxième information est représentative d'un défaut électrique du type thermique et/ou du type différentiel.

### BREVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.

La figure 1 représente un schéma fonctionnel d'un ensemble auxiliaire pour disjoncteur comportant un dispositif auxiliaire de report d'informations dans une configuration de report de défaut avec initialisation par changement d'état du disjoncteur.

La figure 2 représente un schéma fonctionnel des moyens de traitement comportant des moyens permettant de sélectionner différentes configurations correspondant à des modes de fonctionnement donnés.

Les figures 3a, 3b et 3c illustrent le fonctionnement du dispositif auxiliaire dans une configuration de report de défaut avec initialisation par changement d'état du disjoncteur et dans le cas d'une durée d'ouverture du disjoncteur inférieure à une durée de temporisation.

Les figures 4a, 4b et 4c illustrent le fonctionnement du dispositif auxiliaire dans une configuration de report de défaut avec initialisation par changement d'état du disjoncteur et dans le cas d'une durée d'ouverture du disjoncteur supérieure à la durée de temporisation.

Les figures 5a, 5b et 5c illustrent le fonctionnement du dispositif auxiliaire dans une configuration de report de défaut avec initialisation par l'intermédiaire du déclencheur dudit disjoncteur.

La figure 6 représente un schéma plus détaillé d'un mode de réalisation du dispositif auxiliaire selon l'invention.

La figure 7 représente un exemple de face avant d'un disjoncteur avec son ensemble auxiliaire associé comportant un dispositif auxiliaire et des moyens de report d'état disposés dans un bloc de bornes électriques.

La figure 8 représente un schéma fonctionnel d'un exemple d'ensemble auxiliaire selon un mode de réalisation de l'invention

La figure 9 représente un exemple de bloc de bornes électriques comportant les moyens de report d'état.

La figure 10 représente un mode de réalisation du procédé de report d'informations selon l'invention.

### DESCRIPTION DETAILLEE D'UN MODE DE REALISATION

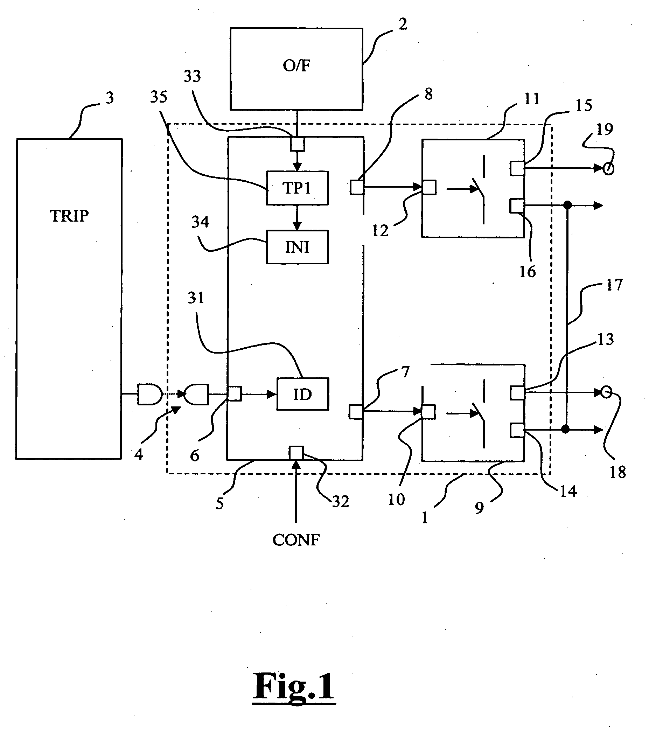

L'ensemble auxiliaire représenté à la figure 1 comporte un dispositif auxiliaire 1 de report d'informations, selon un mode de réalisation de l'invention, permettant de reporter une information représentative d'un défaut électrique et/ou d'un état du disjoncteur. L'ensemble auxiliaire comporte également des moyens de report d'état 2 permettant de reporter l'état du disjoncteur, par exemple l'ouverture O ou la fermeture F des contacts principaux du disjoncteur. L'ensemble auxiliaire est couplé à un déclencheur 3 du disjoncteur par l'intermédiaire du dispositif auxiliaire 1. La fonction principale du déclencheur est de commander l'ouverture des contacts principaux du disjoncteur en réponse à certains défauts électriques.

Le dispositif auxiliaire 1 de report d'information de la figure 1 comporte des moyens de couplage 4 avec le déclencheur 3. Ces moyens de couplage permettent la réception de signaux issus du déclencheur et porteurs d'au moins une deuxième information représentative d'un défaut électrique ou d'une commande auxiliaire.

Le dispositif auxiliaire 1 de report d'information de la figure 1 comporte des moyens de traitement 5, ces derniers comportant une deuxième entrée 6 connectée aux moyens de couplage 4. Les moyens de traitement comportent au moins une sortie de commandes. Dans le mode représenté à la figure 1, les moyens de traitement 5 comportent deux sorties de commande 7 et 8, chacune desdites sorties de commande permettant, dans le cas de la figure 1, de commander le report de la deuxième information ou d'une première information représentative d'un état du disjoncteur. Généralement, chaque sortie permet de commander en fonction de l'état du disjoncteur, soit le report de la deuxième information représentative d'un défaut électrique, soit le report de la première information représentative d'un état du disjoncteur.

Le dispositif auxiliaire 1 comporte des moyens de commutation connectés à la au moins une sortie de commande. Dans le mode représenté à la figure 1, les moyens de commutation comportent un premier module 9 de semi-conducteurs de puissance équipé d'une entrée de commande 10 connectée à la sortie de commande 7. Les moyens de commutation comportent également un second module 11 de semi-conducteurs de puissance équipé d'une entrée de commande 12 connectée à la sortie de commande 8. Le premier module 9 de semi-conducteurs de puissance comporte une sortie 13 et une sortie commune 14. Le second module 11 de semi-conducteurs de puissance comporte une sortie 15 et une sortie commune 16. Les sorties communes 14 et 16 de chaque module sont reliées entre elles par un conducteur 17. Les moyens de commutations, et en particulier les modules 9 et 11 de semi-conducteurs de puissance desdits moyens de commutation, permettent de commuter au moins un contact statique et de reporter sur ledit contact la deuxième ou la première information. Dans le mode représenté à la figure 1, la sortie 13 du premier module 9 est connectée à un premier contact statique 18, et la sortie 15 du second module 11 est connectée à un deuxième contact statique 19. L'un des contacts statiques peut permettre le report d'un type de défaut prédéterminé, par exemple un défaut de type thermique SDT, et l'autre contact statique peut permettre le report d'un autre type de défaut prédéterminé, par exemple un défaut de type différentiel SDV. La différence de niveau de tension sur un contact statique peut permettre de reporter la présence ou l'absence d'un type de défaut prédéterminé. En particulier, un niveau bas de tension ou une tension nulle peut correspondre à l'absence du type de défaut prédéterminé, alors que la présence d'un niveau haut de tension ou d'une tension peut correspondre à la présence de ce même type de défaut. Les contacts statiques 18 et 19 peuvent être connectés à des moyens d'affichage, tels que des diodes luminescentes, pour afficher l'information reportée sur ces contacts et indiquer la présence ou non de certains types de défauts.

Les moyens de traitement 5 représentés à la figure 1 comportent des moyens d'identification 31 connectés à la deuxième entrée pour identifier un défaut électrique ou une commande auxiliaire dans la deuxième information. Par identification d'un défaut électrique, on entend l'identification de la présence d'un défaut électrique, quel que soit le type de défaut. Par identification d'un défaut électrique, on entend également l'identification de la présence d'un type de défaut prédéterminé. Ainsi, les moyens d'identification peuvent permettre d'identifier un défaut électrique choisi parmi :
- les défauts électriques générant l'ouverture de contacts principaux du disjoncteur, par exemple les défauts de type thermique ou différentiel SD, les défauts du type thermique SDT, et les défauts du type différentiel SDV, et/ou
- les défauts électriques ne générant pas l'ouverture des contacts principaux du disjoncteur, par exemple, toute variation de la fréquence par rapport à une référence, toute variation de tension par rapport à une référence, toute défaillance dans la chaîne de mesure.

Lorsque le dispositif auxiliaire est utilisé dans certaines configurations, les moyens d'identification peuvent également permettre d'identifier une commande auxiliaire dans la deuxième information. La commande auxiliaire peut être, par exemple, une commande auxiliaire d'initialisation ou de désactivation de la au moins une sortie de commande ou une commande auxiliaire d'ouverture d'un commutateur annexe.

Les signaux porteurs de la deuxième information peuvent se présenter sous la forme d'une trame comportant des impulsions dont la durée est représentative des informations portées par lesdits signaux. Dans ce cas, les moyens d'identification permettent de déterminer la durée de ces impulsions et de les comparer à différentes valeurs correspondant à des informations prédéterminées.

L'entrée de configuration 32 des moyens de traitement 5 permet de sélectionner une configuration correspondant à un mode de fonctionnement du dispositif auxiliaire. Le mode de réalisation représenté à la figure 1 correspond à une configuration SDX de report de défaut avec initialisation par changement d'état du disjoncteur. Cependant, l'entrée de configuration peut permettre de sélectionner d'autres configurations telle qu'une configuration M2C de report de défaut avec initialisation par l'intermédiaire du déclencheur dudit disjoncteur ou une configuration SDTAM de commande auxiliaire d'un commutateur annexe.

Les moyens de traitement 5 représentés à la figure 1 comportent une première entrée 33 pour recevoir, dans une configuration SDX de report de défaut avec initialisation par changement d'état du disjoncteur, la première information représentative d'un état dudit disjoncteur. Les moyens de traitement 5 comportent également des moyens d'initialisation 34 de la sortie de commande pour commander, dans cette même configuration SDX, le report de la première information représentative d'un état, et ceci en fonction de la deuxième information et de la première information. Dans la configuration SDX de report de défaut avec initialisation par changement d'état du disjoncteur, les moyens de traitement 5 peuvent avantageusement permettre, dans un premier temps, la commande de report de la deuxième information, lorsque la deuxième information est représentative d'un défaut électrique correspondant à un défaut générant une ouverture des contacts principaux du disjoncteur et, dans un deuxième temps, l'initialisation de la sortie de commande, lorsque la première information est représentative d'une fermeture ultérieure des contacts principaux dudit disjoncteur. La deuxième information est généralement représentative d'un défaut électrique du type thermique SDT et/ou du type différentiel SDV. Dans le mode représenté à la figure 1, les deux sorties de commande 7 et 8 permettent de commander le report d'informations, via les moyens de commutations 9 et 11, sur deux contacts statiques 18 et 19 pour reporter distinctivement une information représentative d'un défaut électrique de type thermique SDT et une information de défaut électrique de type différentiel SDV. Un tel dispositif auxiliaire de report d'informations présente une fiabilité accrue, du fait que l'initialisation est provoquée par une information représentative de l'état du disjoncteur et que cette information provient de moyens de report d'état détachés du déclencheur.

Les moyens de traitement peuvent également comporter des moyens de temporisation 35 associés aux moyens d'initialisation pour autoriser l'initialisation de la sortie de commande lorsque le temps écoulé entre le report de la deuxième information et la fermeture des contacts principaux est inférieur à une durée de temporisation prédéterminée. La durée de temporisation peut aller de 500 ms à 1 seconde, de préférence de 300 à 700 ms. Cette temporisation garantit que le disjoncteur a bien changé d'état avant de réinitialisé, ce qui permet, par exemple, de pallier au problème de rebond dans le contact.

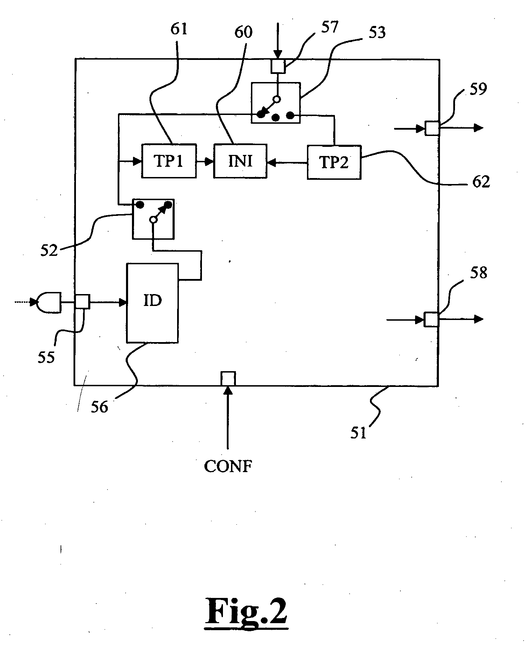

Les moyens de traitement 51 représentés à la figure 2 comportent des moyens de sélection permettant de sélectionner une configuration correspondant à un mode de fonctionnement donné. Ces moyens de sélection de la configuration de la figure 2 sont représentés, à titre illustratif de la fonctionnalité de changement de configurations, sous la forme d'un interrupteur de configuration 52 et d'un commutateur de configuration 53. Il est entendu que cet interrupteur et ce commutateur de configuration ne correspondent pas obligatoirement à des éléments matériels identifiables en tant que tels dans les moyens de traitement. Les moyens de sélection représentés à la figure 2 permettent de sélectionner des configurations choisies parmi :
- au moins une configuration SDX de report de défaut avec initialisation par changement d'état du disjoncteur,
- une configuration M2C de report de défaut avec initialisation par l'intermédiaire du déclencheur dudit disjoncteur, ou
- une configuration SDTAM de commande auxiliaire d'un commutateur annexe.

Les moyens de traitement 51 représentés à la figure 2 comportent, comme dans la figure 1, une deuxième entrée 55, des moyens d'identification 56 connectés à la deuxième entrée, une première entrée 57, deux sorties de commande 58 et 59, des moyens d'initialisation 60 des sorties de commande, et des moyens de temporisation 61 associés aux moyens d'initialisation. En plus des éléments énumérés précédemment et déjà représentés à la figure 1 sous des références numériques différentes, les moyens de traitement 51 comportent des éléments dédiés au fonctionnement dans les deux autres configurations M2C et SDTAM. Parmi ces éléments, des moyens de temporisation 62 associés moyens d'initialisation 62 permettent, dans une configuration SDTAM de temporiser l'initialisation d'une au moins des sorties de commandes 58 et/ou 59.

L'interrupteur de configuration 52 et le commutateur de configuration 53 de la figure 2 sont représentés dans des états permettant une configuration SDX de report de défaut avec initialisation par changement d'état du disjoncteur. Dans cette configuration SDX, le commutateur de configuration 53 est dans un état permettant de connecter la première entrée 57, par l'intermédiaire des moyens de temporisation 61, aux moyens d'initialisation 60. De ce fait, la première information représentative d'un état O ou F dudit disjoncteur permet de commander l'initialisation des sorties de commande 58 et 59. L'interrupteur de configuration 52 est, quant à lui, dans un état ouvert pour déconnecter les moyens d'identification des moyens d'initialisation. Ainsi, dans cette configuration SDX, les moyens de traitement permettent, dans un premier temps, la commande de report de la deuxième information disponible sur la deuxième entrée 55, lorsque cette information est représentative d'un défaut électrique correspondant à un défaut générant une ouverture des contacts principaux du disjoncteur. Ces moyens de traitement permettent également, dans un deuxième temps, l'initialisation des sorties de commande, lorsque la première information disponible sur la première entrée 57 est représentative d'une fermeture ultérieure des contacts principaux dudit disjoncteur et lorsque le temps écoulé entre le report de la deuxième information sur l'entrée 57 et la fermeture des contacts principaux est inférieur à une durée de temporisation prédéterminée.

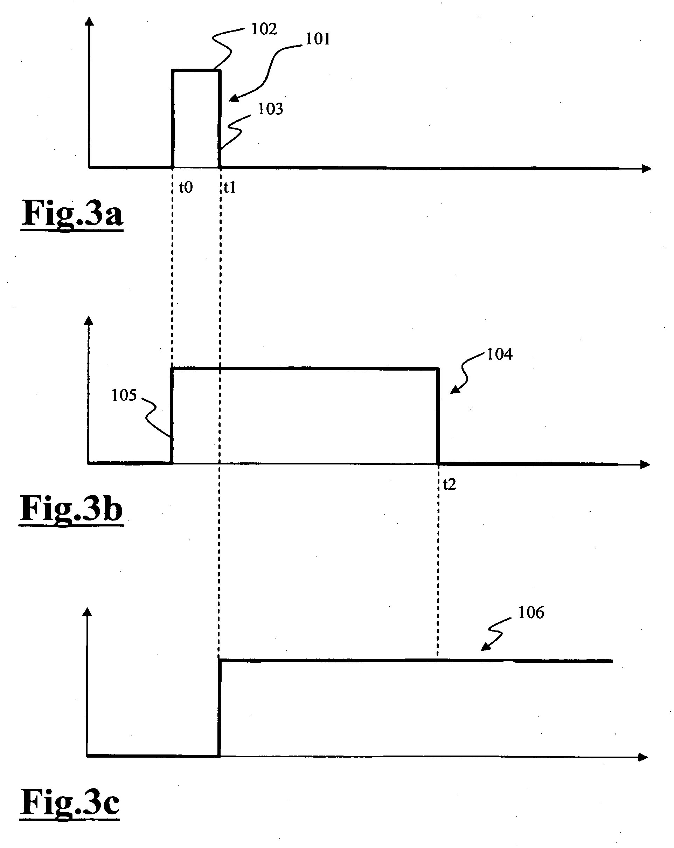

Les figures 3a à 3c illustrent le fonctionnement du dispositif auxiliaire, dans une configuration SDX, et lorsque l'ouverture du disjoncteur consécutive à un défaut électrique, s'étend sur une durée inférieure à la durée de temporisation. Le signal 101 représentée à la figure 3a, reçu sur la deuxième entrée 55, est porteur d'une deuxième information représentative d'un défaut, en l'occurrence un type de défaut prédéterminé. Ce signal comporte une impulsion 102 dont la durée permet d'identifier le type de défaut prédéterminé, par exemple un défaut de type thermique SDT ou de type différentiel SDV. Le défaut apparaît au temps t0 et est identifié au temps t1 ou peu de temps après, c'est à dire, au plus tôt, lors du front descendant 103 de l'impulsion 102. Par ailleurs, la présence de ce type de défaut prédéterminé génère un changement d'état du disjoncteur, en l'occurrence une ouverture des contacts principaux, cette information représentative d'un état étant reportée sur la première entrée 57. Ainsi, comme cela est représenté à la figure 3b, le signal 104 reçu sur la première entrée 57 comporte un front montant 105 représentatif de l'ouverture des contacts principaux du disjoncteur. Ce front montant 105 du signal 104 peut intervenir peu de temps après le temps t0. Le signal 104 est maintenu à un niveau haut jusqu'au temps t2 correspondant à une fermeture des contacts principaux du disjoncteur. Au temps t1, une commande de report de la deuxième information représentative du défaut est envoyée sur la sortie de commande 58 des moyens de traitement. Cette deuxième information est ensuite reportée, par l'intermédiaire des moyens de commutation, sur le contact statique ou l'un des contacts statiques permettant le report du type de défaut prédéterminé. Ainsi, la tension 106 sur ce contact statique, représentée à la figure 3c, passe au temps t1, d'un niveau bas à un niveau haut, pour reporter la présence d'un défaut correspondant au type de défaut prédéterminé. Le temps écoulé entre t1 et t2 étant inférieur à la durée de temporisation des moyens de temporisation 61, aucune initialisation n'est réalisée et la tension 106 sur le contact statique, représentée à la figure 3c, est maintenu après le temps t2 à un niveau haut. Les contacts principaux du disjoncteur étant restés ouverts pendant une durée inférieure à la durée de temporisation fixée par les moyens de temporisations 61, la réinitialisation des sorties de commande n'est pas faite. Ceci permet de pallier aux problèmes de rebond dans le contact.

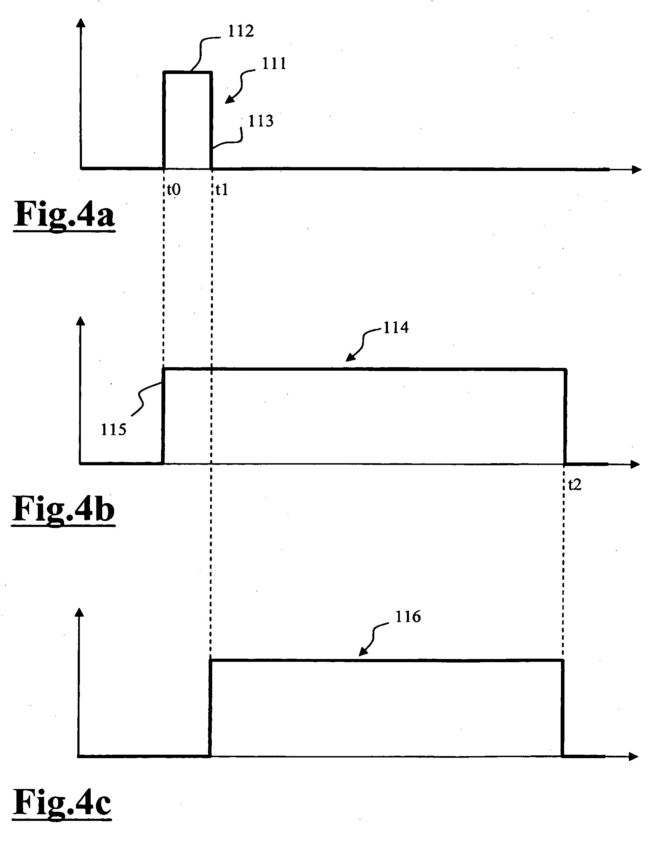

Les figures 4a à 4c illustrent le fonctionnement du dispositif auxiliaire, dans une configuration SDX, et lorsque l'ouverture du disjoncteur consécutive à un défaut électrique, s'étend sur une durée supérieure à la durée de temporisation. Le signal 111 représentée à la figure 4a, reçu sur la deuxième entrée 55, comporte une impulsion 112 dont la durée permet d'identifier le type de défaut prédéterminé, par exemple un défaut de type thermique SDT ou de type différentiel SDV. Le défaut apparaît au temps t0 et est identifié au temps t1 ou peu de temps après, c'est à dire, au plus tôt, lors du front descendant 113 de l'impulsion 112. Le signal 114 reçu sur la première entrée 57 comporte, quant à lui, un front montant 115 représentatif de l'ouverture des contacts principaux du disjoncteur. Comparé à la figure 3b, le signal 114 de la figure 4b est maintenu à un niveau haut plus longtemps, jusqu'à un temps t2 correspondant à une fermeture des contacts principaux du disjoncteur. De la même façon qu'à la figure 3c, la tension 116 sur le contact statique représentée à la figure 4c, passe au temps t1, d'un niveau bas à un niveau haut, pour reporter la présence d'un défaut correspondant au type de défaut prédéterminé. Cependant, le temps écoulé entre t1 et t2 étant supérieur à la durée de temporisation, une initialisation de la sortie de commande est réalisée lorsque la première information est représentative de la fermeture ultérieure des contacts principaux. De ce fait, la tension 116 sur le contact statique, représentée à la figure 3c, passe après le temps t2, d'un niveau haut à un niveau bas. En mode SDX, la réinitialisation des sorties de commande n'est faite que i) si les contacts principaux du disjoncteur étaient ouverts pendant au moins la durée de temporisation des moyens de temporisations 61, et ii) si ces contacts ont été refermés ultérieurement. Les moyens de temporisation 61 permettent ainsi de s'assurer que la réinitialisation des sorties de commande peut être effectuées.

Dans une configuration M2C de report de défaut avec initialisation par l'intermédiaire du déclencheur dudit disjoncteur, l'interrupteur de configuration 52 est dans un état fermé et le commutateur 53 est dans un état permettant de déconnecter complètement la première entrée 57, c'est à dire que la première entrée est déconnectée par rapport aux moyens de temporisation 61 et 62. Dans cette configuration M2C, les moyens de traitement permettent, dans un premier temps, la commande de report de la deuxième information disponible sur la deuxième entrée 55, lorsque la deuxième information est représentative d'un défaut électrique, et dans un deuxième temps, l'initialisation des sorties de commande, lorsque la deuxième information est représentative d'une commande auxiliaire d'initialisation.

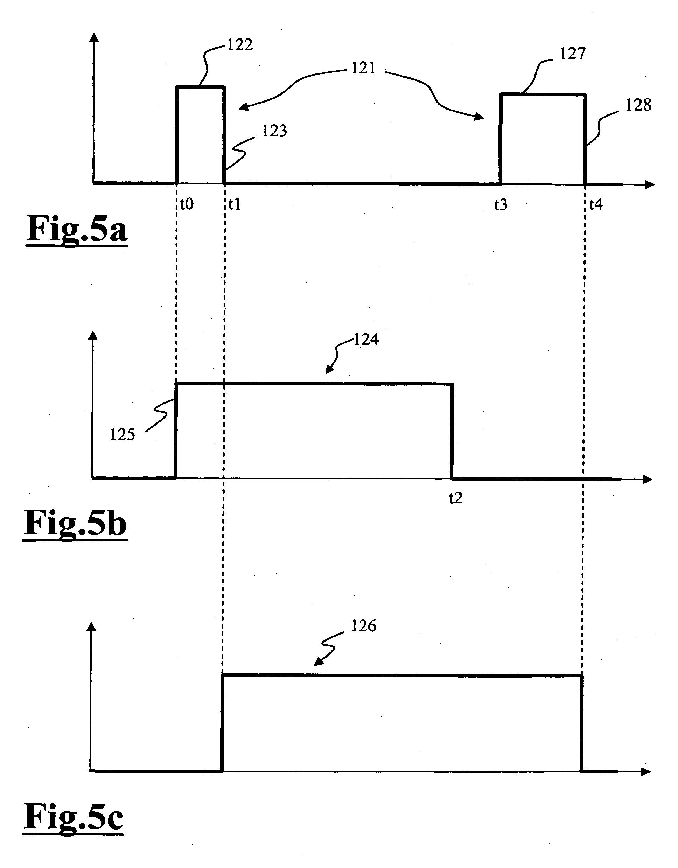

Les figures 5a à 5c illustrent le fonctionnement du dispositif auxiliaire, dans une configuration M2C. Le signal 121 représenté à la figure 5a, reçu sur la deuxième entrée 55, est porteur d'une deuxième information représentative d'un défaut, en l'occurrence de la présence d'un type de défaut prédéterminé. Ce signal comporte une impulsion 122 dont la durée permet d'identifier le type de défaut prédéterminé, par exemple un défaut de type thermique SDT ou de type différentiel SDV ou un autre type de défaut, par exemple ne générant pas une ouverture des contacts principaux du disjoncteur. Le défaut apparaît au temps t0 et est identifié au temps t1 ou peu de temps après, c'est à dire, au plus tôt, lors du front descendant 123 de l'impulsion 122. Par ailleurs, la présence de ce type de défaut prédéterminé génère, dans ce cas particulier, un changement d'état du disjoncteur, en l'occurrence une ouverture des contacts principaux. L'information représentative de l'ouverture des contacts principaux est reportée sur la première entrée 57. Ainsi, comme cela est représenté à la figure 5b, le signal 124 reçu sur la première entrée 57 comporte un front montant 125 représentatif de l'ouverture des contacts principaux du disjoncteur. Ce front-montant 125 du signal 124 peut intervenir peu de temps après le temps t0. Le signal 124 est maintenu à un niveau haut jusqu'au temps t2 correspondant à une fermeture des contacts principaux du disjoncteur. Au temps t1, une commande de report de la deuxième information représentative du défaut est envoyée sur la sortie de commande 58 des moyens de traitement. Cette deuxième information est ensuite reportée, par l'intermédiaire des moyens de commutation, sur le contact statique ou l'un des contacts statiques permettant le report du type de défaut prédéterminé. Ainsi, la tension 126 sur ce contact statique, représentée à la figure 5c, passe au temps t1, d'un niveau bas à un niveau haut, pour reporter la présence d'un défaut correspondant au type de défaut prédéterminé. Contrairement à la configuration SDX, dans la configuration M2C, l'initialisation de la sortie de commande n'est pas réalisée en réponse à une fermeture ultérieure des contacts principaux. Dans la configuration M2C, l'initialisation de la sortie de commande est réalisée lorsque la deuxième information est représentative d'une commande auxiliaire d'initialisation. Comme cela est représenté à la figure 5a, cette commande auxiliaire d'initialisation est reçue sur la deuxième entrée 55 des moyens de traitement, à un temps t3. Ainsi, le signal 121 comporte, au temps t3, le début d'une impulsion 127 dont la durée, différente de celle de l'impulsion 122 permet d'identifier une commande auxiliaire d'initialisation. Comme cela est représenté à la figure 5c, l'initialisation est réalisée au temps t4, ou peu de temps après, c'est à dire sur le front descendant 128 de l'impulsion 127. La tension 126 sur le contact statique, représentée à la figure 5c, passe après le temps t4, ou peu de temps après, d'un niveau haut à un niveau bas. La configuration M2C permet de ne pas prendre en compte l'état du disjoncteur pour réinitialiser les sorties de commande et de conserver le report d'information jusqu'à un ordre d'initialisation provenant du déclencheur via les moyens de couplage.

Dans une configuration SDTAM de commande auxiliaire d'un commutateur annexe, l'interrupteur de configuration 52 est dans un état fermé et le commutateur de configuration 53 est dans un état permettant de connecter la première entrée 57 aux moyens de temporisation 62. Dans la configuration SDTAM, la première entrée est utilisée pour fournir une durée de temporisation. Dans cette configuration SDTAM, les moyens de traitement permettent, dans un premier temps, la commande de report de la deuxième information disponible sur la deuxième entrée 55, lorsque la deuxième information est représentative d'une commande auxiliaire d'ouverture d'un commutateur annexe, et dans un deuxième temps, l'initialisation des sorties de commande, lorsque la deuxième information est représentative d'une commande auxiliaire d'initialisation. La commande de report de la deuxième information, lorsque celle-ci est représentative d'une commande auxiliaire, permet de commander à distance les ouvertures des contacts principaux d'un commutateur annexe par l'intermédiaire des contacts statiques. Dans cette configuration SDTAM, les contacts statiques sont connectés, par tout moyen de couplage connu de l'homme du métier, à une entrée de commande du commutateur annexe. La commande auxiliaire d'initialisation est avantageusement temporisée par les moyens de temporisation 62, ce qui permet de refermer les contacts du commutateur annexe et d'assurer une continuité de service des installations protégées par le disjoncteur. Le dispositif auxiliaire comporte avantageusement des moyens de réglage de la temporisation de la commande auxiliaire d'initialisation. Dans ce cas, une sortie de ces moyens de réglage est connectée à la première entrée 57. Cette première entrée reçoit ainsi une information représentative de la durée de temporisation des moyens de temporisation 62.

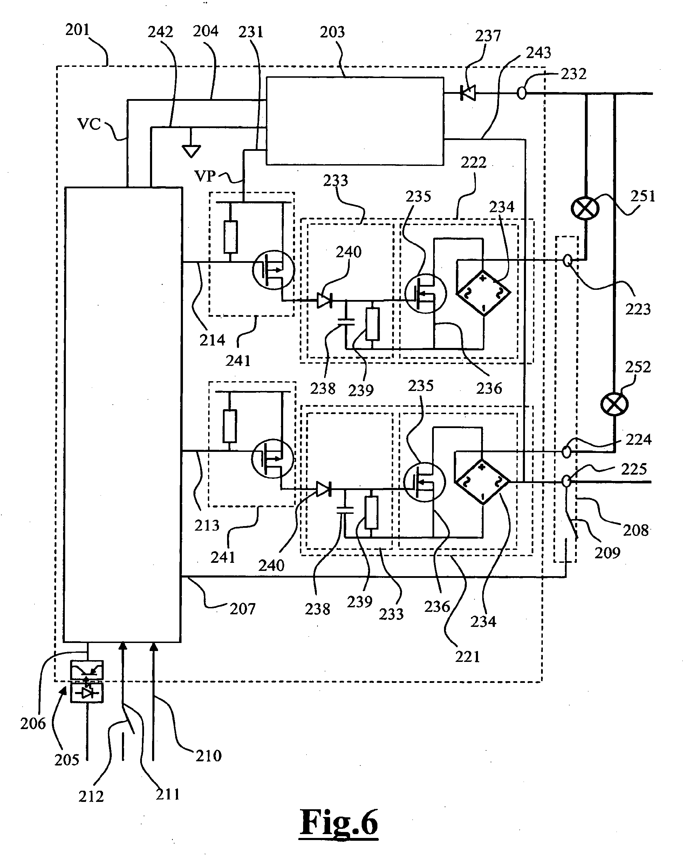

Le dispositif auxiliaire 201 représenté à la figure 6 comporte un circuit de contrôle 202 et un circuit d'alimentation 203 permettant, entre autres, de fournir une tension d'alimentation au circuit de contrôle via un conducteur 204. Dans le mode représenté à la figure 6, le circuit de contrôle 202 comprend les moyens de traitement et comporte les éléments décrits précédemment, tels que des moyens d'identification et des moyens d'initialisation. Un photo coupleur 205 permet de coupler les moyens de traitement 202 avec un déclencheur du disjoncteur par l'intermédiaire d'une deuxième entrée 206 dudit circuit de contrôle. Le photo coupleur 205 comporte avantageusement au moins un coupleur optique et des moyens de protection hermétiques. Une première entrée 207 dudit circuit de contrôle permet un couplage avec un bloc de bornes 208 comportant des moyens de report d'état du disjoncteur. Plus précisément, la première entrée 207 est destinée à être connectée avec un contact électrique d'un interrupteur 209 des moyens de report d'état dans le bloc de bornes 208, ledit contact étant actionné par un mécanisme du disjoncteur. La deuxième entrée 206 permet de fournir la deuxième information représentative d'un défaut électrique ou d'une commande auxiliaire, alors que la première entrée 207 permet de fournir la première information représentative d'un état O ou F du disjoncteur. Le circuit de contrôle comporte également une entrée de contrôle 210 pour la configuration et une entrée 211 sensible à un contact électrique 212 pour une réinitialisation globale. Le circuit de contrôle 202 comporte deux sorties de commande 213 et 214 pour commander le report d'une deuxième information reçue sur la deuxième entrée 206 ou d'une première information reçue sur la première entrée 207.

Le dispositif auxiliaire 201 représenté à la figure 6 comporte des moyens de commutation connectés aux sorties de commande 213 et 214 du circuit de contrôle 202. Les moyens de commutation comportent un premier module 221 de semi-conducteurs de puissance et un second module 222 de semi-conducteurs de puissance. Le premier module 221 de semi-conducteurs de puissance comporte une sortie commune et une sortie connectée à un deuxième contact statique 224. Le second module 222 de semi-conducteurs de puissance comporte une sortie commune et une sortie connectée à un premier contact statique 223. Les deux sorties communes sont généralement reliées entre elles pour être groupées en une sortie commune principale 225.

Pour éviter les problèmes de découplage des circuits alimentations, le circuit d'alimentation 203 fournit une tension de polarisation VP, sur une sortie 231 de tension de polarisation, lorsque l'on est en présence d'une première polarité permettant un passage de courant entre une entrée 232 d'alimentation du circuit d'alimentation 203 et la sortie commune principale 225.

Dans ce dispositif, les modules 221 et 222 de semi-conducteur de puissance comportent :
- des moyens de blocage de courant pour bloquer une circulation de courant lorsqu'il y a une seconde polarité opposée à la première polarité entre l'entrée 232 d'alimentation et la sortie commune principale 225, et
- des moyens de stockage 233 d'énergie électrique de polarisation pour commander la conduction des semi-conducteurs de puissance des modules 221 et 222, pendant le blocage de courant du circuit d'alimentation 203.

Chaque module 221 et 222 comporte un pont redresseur 234 formé de quatre diodes non représentés. Chaque pont redresseur 234 comporte deux bornes alternatives correspondant aux sorties des modules 221 et 222 connectées aux contacts statiques 223, 224 et 225, et des bornes continues connectées à des électrodes de puissance d'un composant électronique de puissance 235. Les moyens de blocage de courant sont constitués par au moins une diode non représentée de chaque pont redresseur 234 connectée entre une électrode de référence 236 du semi-conducteur de puissance 235 et la sortie commune principale 225. Dans ce cas, la tension de polarisation VP est fournie par le circuit d'alimentation lorsqu'une polarité de tension positive est appliquée sur l'entrée 232 et une polarité de tension négative est appliquée sur la seconde sortie commune 225. L'électrode de référence 236 des semi-conducteurs de puissance 235 correspond à la source ou l'émetteur, selon le type de transistor de puissance qui est utilisé. Les moyens de stockage 233 d'énergie électrique de polarisation pour la commande du semi-conducteur de puissance 235 sont connectés à une électrode de commande dudit semi-conducteur de puissance. Une diode de 237 connectée en série avec l'entrée 232 d'alimentation du circuit d'alimentation 203 participe au blocage de l'alimentation en cas d'alternance négative. Les moyens de stockage sont constitués dans ce cas par un circuit RC comportant un condensateur 238 et une résistance 239 connectés en parallèle et une diode série 240 anti-retour. Le condensateur stocke une énergie ou une tension électrique de commande pendant un temps prédéterminé par les valeurs du condensateur 237 et de la résistance 238. Les moyens de stockage sont référencés à l'électrode de référence 236 du semi-conducteur de puissance 235, c'est à dire la source ou l'émetteur selon le type de transistor utilisé.

Pour améliorer la commande des modules 221 et 222, les moyens de commutation du dispositif auxiliaire représenté à la figure 6 comportent des moyens 241 de changement de ligne de référence pour changer une ligne de référence de signaux de commande entre une première ligne de référence 242 de signaux d'entrée et une seconde ligne de référence dépendante de la sortie 231 de tension de polarisation VP. Sur le schéma de la figure 6, des circuits 241 changent la référence de commande des modules 221 et 222 en appliquant la tension VP sans être référencé à la ligne de référence 242 du circuit de contrôle 202. Les circuits 241 opèrent ainsi un découplage électrique entre la ligne de référence 242 d'entrée du circuit de contrôle et la sortie commune 225.

Le circuit d'alimentation du dispositif auxiliaire représenté à la figure 6 comporte également une seconde entrée 243 de tension d'alimentation connectée à la sortie commune principale 225 des modules de semi-conducteurs de puissance 221 et 222. Le circuit de contrôle 202 est alimenté par une tension d'alimentation VC par l'intermédiaire du conducteur 204. Les sorties de commande 213 et 214 du circuit de contrôle 202 permettent de fournir des signaux de commande aux modules 221 et 222 de semi-conducteurs de puissance, par l'intermédiaire des circuits 241 de changement de ligne de référence. Dans le mode de réalisation représenté à la figure 6, les lignes de références 242 du circuit de contrôle 202, de la tension de polarisation VP, des électrodes de référence 236 des semi-conducteurs de puissance 235, et de la sortie commune principale 225 sont à des tensions électriques différentes.

Dans le dispositif auxiliaire représenté à la figure 6, des voyants de signalisation 251 et 252 sont respectivement connectés sur les contacts statiques 223 et 224. Ainsi, les moyens de commutations, et en particulier les modules 221 et 222, permettent de commuter au moins un des contacts statiques 223 et 224 et de reporter sur ledit contact la deuxième ou la première information, lesquelles informations étant affichées par l'intermédiaire des voyants de signalisation 251 et 252. L'un des contacts statiques peut permettre le report d'un type de défaut prédéterminé, par exemple un défaut de type thermique SDT, et l'autre contact statique peut permettre le report d'un autre type de défaut prédéterminé, par exemple un défaut de type différentiel SDV.

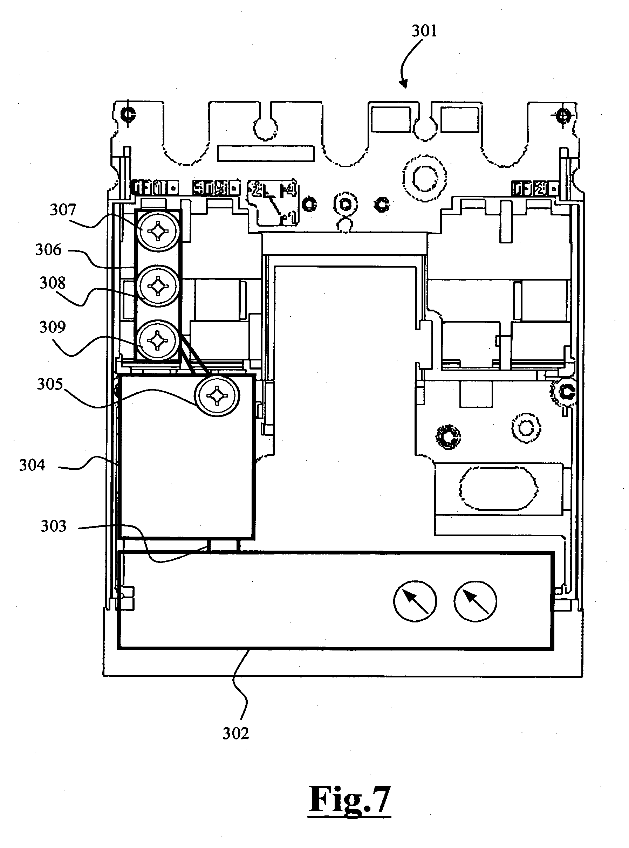

Le disjoncteur électrique 301 représenté à la figure 7 comporte un déclencheur électronique 302 pour déclencher l'ouverture de contacts principaux dudit disjoncteur en réponse à au moins un type de défaut électrique. Le disjoncteur comporte également un ensemble auxiliaire selon un mode de réalisation de l'invention, ledit ensemble auxiliaire étant couplé au déclencheur par l'intermédiaire des moyens de couplage 303 du dispositif auxiliaire 304 de report d'information dudit ensemble auxiliaire. Le dispositif auxiliaire 304 présente une forme standard pour être monté dans un compartiment dudit disjoncteur et comporte une entrée 305 d'alimentation du circuit d'alimentation non représenté. Outre le dispositif auxiliaire, l'ensemble auxiliaire comporte des moyens de report d'état du disjoncteur séparés dudit dispositif auxiliaire et disposés dans un bloc de bornes électriques 306 séparé et connecté aux contacts statiques dudit dispositif auxiliaire. Le bloc de bornes électriques comporte des contacts statiques 307 et 308 connectés aux sorties de commande des moyens de commutation du dispositif auxiliaire et un contact statique 309 connecté à la sortie commune principale desdits moyens de commutation.

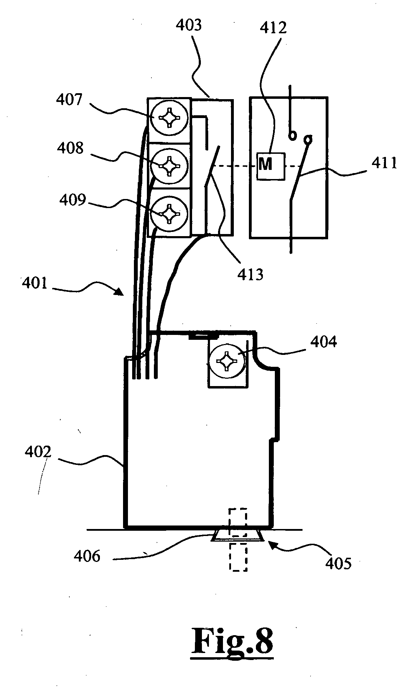

L'ensemble auxiliaire 401 représenté à la figure 8 comporte un dispositif auxiliaire 402 selon un mode de réalisation et un bloc de bornes électriques 403. Le dispositif auxiliaire a une forme standard pour être monté dans un compartiment du disjoncteur et comporte une entrée d'alimentation 404 du circuit d'alimentation non représenté. Le dispositif auxiliaire comporte un photo coupleur 405 équipé d'un coupleur optique et des moyens de protection hermétiques. Pour améliorer la protection et l'étanchéité de la liaison, le couplage mécanique est réalisé par un dispositif à glissière 406 pouvant avoir une forme en queue d'aronde comme cela est représenté ou une forme de glissières à rainures rectangulaires. Une telle protection de la liaison permet d'éviter que des projections ou des fumées, présentes lors de coupures du disjoncteur à très fort courants, viennent perturber la communication par faisceaux optiques. Le bloc de bornes électrique 402 comporte des contacts statiques 407 et 408 connectés aux sorties de commande des moyens de commutation du dispositif auxiliaire et un contact statique 409 connecté à la sortie commune principale desdits moyens de commutation. La figure 8 représente également de manière schématique les contacts principaux 411 du disjoncteur et le mécanisme 412 dudit disjoncteur permettant d'actionner un contact électrique 413 des moyens de report d'état du bloc de bornes électriques. Le contact électrique est connecté à la première entrée des moyens de traitement du dispositif auxiliaire pour recevoir la première information représentative d'un état dudit disjoncteur, en l'occurrence l'ouverture ou la fermeture dudit disjoncteur. Ainsi, le mécanisme 412 permet d'actionner l'ouverture et la fermeture des contacts principaux du disjoncteur et de reporter la première information représentative d'état vers le contact électrique 413.

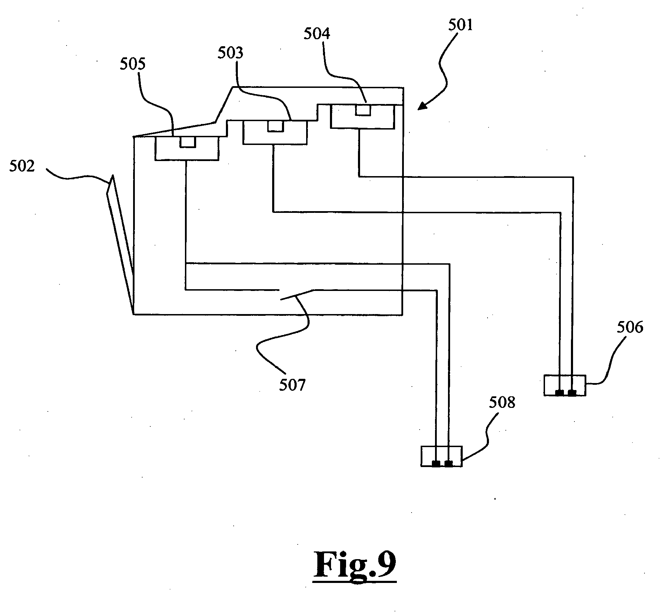

Le bloc de bornes électriques 501 de l'ensemble auxiliaire, représenté schématiquement à la figure 9, présente une forme standard pour être monté dans au moins un compartiment dudit disjoncteur à l'aide d'une patte de fixation 502. Le bloc de bornes électriques 501 comporte des contacts statiques 503, 504 et 505. Les contacts statiques 503 et 504 sont destinés à être connectés aux sorties de commande des moyens de commutation du dispositif auxiliaire par l'intermédiaire d'une première prise 506. Le bloc de bornes électriques comporte également un contact électrique 507 actionné par un mécanisme du disjoncteur et connecté au contact statique 505. Une deuxième prise 508 permet de connecter le contact statique 505 à la sortie commune principale desdits moyens de commutation du dispositif auxiliaire, et de connecter le contact électrique 507 à la première entrée des moyens de traitement dudit dispositif auxiliaire.

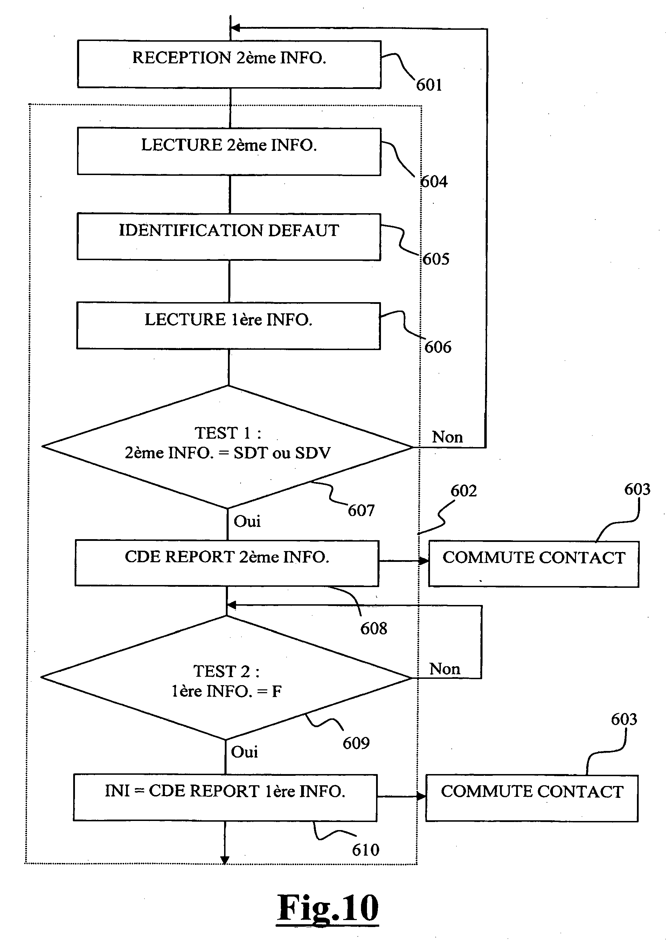

L'algorithme de la figure 10 représente procédé de report d'informations selon un mode de réalisation préférentiel de l'invention. Le procédé comporte :
- une étape 601 de réception pour recevoir des signaux porteurs d'au moins une deuxième information représentative d'un défaut électrique ou d'une commande auxiliaire,
- une étape 602 de traitement pour lire la deuxième information et pour commander le report de ladite deuxième information sur une sortie de commande ou d'une première information représentative d'un état dudit disjoncteur O ou F, et
- une étape 603 de commutation pour commuter au moins un contact statique en fonction de la commande et pour reporter sur ledit contact au moins l'une desdites informations.

L'étape 602 de traitement comporte elle-même :
- une étape 604 de lecture de la deuxième information représentative d'un défaut électrique ou d'une commande auxiliaire,
- une étape 605 d'identification pour identifier le défaut électrique SD, SDT ou SDV dans la deuxième information,
- une étape 606 de lecture, dans une configuration SDX, de la première information représentative d'un état dudit disjoncteur O ou F,
- une étape 607 de test pour déterminer si, dans ladite configuration SDX, la deuxième information est représentative d'un défaut électrique correspondant à un défaut SDT ou SDV générant une ouverture des contacts principaux du disjoncteur,
- une étape 608 de commande de report de la deuxième information si le résultat du test de l'étape 607 est positif,
- une étape 609 de test pour déterminer si, dans ladite configuration SDX, la première information est représentative d'une fermeture ultérieure des contacts principaux dudit disjoncteur, et
- une étape 610 d'initialisation pour commander le report de la première information représentative d'un état F dudit disjoncteur si le résultat du test de l'étape 609 est positif.

Un avantage du dispositif auxiliaire de report d'état selon l'invention est, dans le mode SDX, de permettre l'utilisation de moyens existants, en l'occurrence les moyens de report d'état, pour initialiser la sortie de commande des moyens de traitement.

Un autre avantage du dispositif auxiliaire de report d'état selon l'invention est que, dans le mode SDX, la commande de l'initialisation par l'intermédiaire des moyens de report d'état est reportée de manière fiable. Ainsi, la présence d'un défaut électrique est reportée tant que les contacts principaux du disjoncteur n'ont pas été refermés.

## Revendications

1. Dispositif auxiliaire (1 ; 201 ; 304 ; 402) de report d'informations pour disjoncteur (301), ledit dispositif comportant des moyens de traitement (5 ; 51 ; 202) comprenant :
- une première entrée (33 ; 57 ; 207) pour recevoir (606), dans au moins une configuration, une première information représentative d'un état (O, F) dudit disjoncteur, et
- au moins une sortie de commande (7 , 8 ; 58 , 59 ; 213 , 214) pour commander le report d'une information,
**caractérisé en ce que** les moyens de traitement comportent :
- une deuxième entrée (6 ; 55 ; 206) pour recevoir au moins une deuxième information représentative d'un défaut électrique ou d'une commande auxiliaire,
- des moyens d'identification (31 ; 56) connectés à la deuxième entrée pour identifier (605) le défaut électrique (SD, SDT, SDV) dans la deuxième information, et
- des moyens d'initialisation (34 ; 60) de la au moins une sortie de commande pour commander (610), dans ladite configuration, le report de la première information représentative d'un état (O, F) dudit disjoncteur en fonction de la première information et de la deuxième information.

2. Dispositif selon la revendication 1, **caractérisé en ce que** les moyens d'identification (31 ; 56) permettent d'identifier un défaut électrique choisi parmi :
- les défauts électriques générant l'ouverture de contacts principaux du disjoncteur, et/ou
- les défauts électriques ne générant pas l'ouverture des contacts principaux du disjoncteur.

3. Dispositif selon la revendication 2, **caractérisé en ce que** les défauts électriques générant l'ouverture de contacts principaux du disjoncteur comprennent :
- les défauts de type thermique ou différentiel (SD)
- les défauts du type thermique (SDT), et
- les défauts du type différentiel (SDV).

4. Dispositif selon la revendication 2, **caractérisé en ce que** les défauts électriques ne générant pas l'ouverture de contacts principaux du disjoncteur comprennent :
- toute variation de la fréquence par rapport à une référence,
- toute variation de tension par rapport à une référence, et
- toute défaillance dans la chaîne de mesure.

5. Dispositif selon l'une des revendications 1 à 4, **caractérisé en ce que** les signaux porteurs de la deuxième information se présentent sous la forme d'une trame (101) comportant une impulsion (102 ; 112 ; 122 ; 127) dont la durée (T1) est représentative des informations portées par lesdits signaux.

6. Dispositif selon l'une des revendications 1 à 5, **caractérisé en ce que** les moyens de traitement (5 ; 51 ; 202) comportent une entrée de configuration (32).

7. Dispositif selon l'une des revendications 1 à 6, **caractérisé en ce que**, dans une configuration (SDX) de report de défaut avec initialisation par changement d'état du disjoncteur, les moyens de traitement permettent :
- la commande de report de la deuxième information (608), lorsque la deuxième information est représentative d'un défaut électrique correspondant à un défaut générant une ouverture des contacts principaux du disjoncteur (607), et
- l'initialisation de la au moins une sortie de commande (610), lorsque la première information est représentative d'une fermeture ultérieure des contacts principaux dudit disjoncteur (609).

8. Dispositif selon la revendication 7, **caractérisé en ce que**, dans la configuration (SDX) de report de défaut avec initialisation par changement d'état du disjoncteur, la deuxième information est représentative d'un défaut électrique du type thermique (SDT) et/ou du type différentiel (SDV).

9. Dispositif selon l'une des revendications 7 ou 8, **caractérisé en ce qu'**il comporte deux sorties de commande (13 ; 15) pour commander le report d'informations sur deux contacts statiques (18 ; 19) permettant de reporter distinctivement une information représentative d'un défaut électrique de type thermique (SDT) et une information représentative d'un défaut électrique de type différentiel (SDV).

10. Dispositif selon l'une des revendications 7 à 9, **caractérisé en ce que** les moyens de traitement (5 ; 51) comportent des moyens de temporisation (61) associés aux moyens d'initialisation (60) pour autoriser l'initialisation (610) lorsque le temps écoulé entre le report de la deuxième information et la fermeture des contacts principaux est inférieur à une durée de temporisation prédéterminée.

11. Dispositif selon la revendication 10, **caractérisé en ce que** la durée de temporisation est comprise entre 300 et 700 ms.

12. Dispositif selon l'une des revendications 1 à 6, **caractérisé en ce que**, dans une configuration (M2C) de report de défaut avec initialisation par l'intermédiaire du déclencheur dudit disjoncteur, les moyens de traitement permettent :
- la commande de report de la deuxième information, lorsque la deuxième information est représentative d'un défaut électrique, et
- l'initialisation de la au moins une sortie de commande, lorsque la deuxième information est représentative d'une commande auxiliaire d'initialisation.

13. Dispositif selon l'une des revendications 1 à 6, **caractérisé en ce que**, dans une configuration (SDTAM) de commande auxiliaire d'un commutateur annexe, les moyens de traitement permettent :
- la commande de report de la deuxième information, lorsque la deuxième information est représentative d'une commande auxiliaire d'ouverture d'un commutateur annexe, et
- l'initialisation de la au moins une sortie de commande, lorsque la deuxième information est représentative d'une commande auxiliaire d'initialisation.

14. Dispositif selon la revendication 13, **caractérisé en ce que** la commande auxiliaire d'initialisation est temporisée.

15. Dispositif selon l'une des revendications 13 ou 14, **caractérisé en ce qu'**il comporte des moyens de réglage (62) de la temporisation de la commande auxiliaire d'ouverture d'un commutateur annexe.

16. Dispositif selon la revendication 15, **caractérisé en ce que** la première entrée (57) est connectée aux moyens de réglage (62) pour recevoir une information représentative de la temporisation.

17. Dispositif selon l'une des revendications 1 à 16, **caractérisé en ce qu'**il comporte des moyens de couplage (4 ; 205 ; 303 ; 405) avec un déclencheur (3 ; 302) dudit disjoncteur pour recevoir des signaux porteurs de la deuxième information représentative d'un défaut électrique ou d'une commande auxiliaire, la deuxième entrée (6 ; 55 ; 206) étant connectée aux dits moyens de couplage.

18. Dispositif selon la revendication 17, **caractérisé en ce que** les moyens de couplage (4 ; 205 ; 303 ; 405) comporte un coupleur optique et des moyens de protection hermétique.

19. Dispositif selon l'une des revendications 1 à 18, **caractérisé en ce qu'**il comporte des moyens de commutation (9 , 11 ; 221 , 222) connectés à la au moins une sortie de commande pour commuter au moins un contact statique (18 , 19 ; 223, 224 ; 307 , 308 ; 407, 408 ; 503 , 504) et pour reporter sur ledit contact au moins l'une desdites informations.

20. Ensemble auxiliaire d'un disjoncteur électrique, **caractérisé en ce qu'**il comporte :
- un dispositif auxiliaire (1 ; 201) selon l'une des revendications 1 à 19, et
- des moyens de report d'état du disjoncteur séparés dudit dispositif auxiliaire et couplés à la première entrée (33 ; 207) de ce dernier.

21. Ensemble auxiliaire selon la revendication 20, **caractérisé en ce que** les moyens de report d'état comportent un contact électrique (413) actionné par un mécanisme (412) du disjoncteur.

22. Ensemble auxiliaire selon l'une des revendications 20 ou 21, **caractérisé en ce que** les moyens de report d'état du disjoncteur sont disposés dans un bloc de bornes électriques (306 ; 412 ; 501) connectés aux contacts statiques dudit dispositif auxiliaire.

23. Disjoncteur électrique (301) comportant :
- un déclencheur électronique (302) pour déclencher l'ouverture de contacts principaux dudit disjoncteur en réponse à au moins un type de défaut électrique, et
- un ensemble auxiliaire (304 ; 306) couplé audit déclencheur électronique, **caractérisé en ce que** ledit ensemble auxiliaire est selon les revendications 20 à 22, et **en ce qu'**il est couplé au déclencheur par l'intermédiaire des moyens de couplage (303) du dispositif auxiliaire de report d'information dudit ensemble auxiliaire.

24. Procédé de report d'informations pour disjoncteur comportant :
- une étape (606) de lecture, dans au moins une configuration, d'une première information représentative d'un état (O, F) dudit disjoncteur, et
- une étape de commande (608) pour commander le report d'une information, **caractérisé en ce que** les moyens de traitement comportent :
- une étape (604) de lecture pour recevoir au moins une deuxième information représentative d'un défaut électrique ou d'une commande auxiliaire,
- une étape (605) d'identification pour identifier un défaut électrique (SD, SDT, SDV) dans la deuxième information, et
- une étape d'initialisation (610) pour commander, dans ladite configuration, le report de la première information représentative d'un état (O, F) dudit disjoncteur en fonction de la première information et de la deuxième information.

25. Procédé selon la revendication 24, **caractérisé en ce que**, dans la configuration (SDX) de report de défaut avec initialisation par changement d'état du disjoncteur,
- lorsque la deuxième information est représentative d'un défaut électrique correspondant à un défaut générant une ouverture des contacts principaux du disjoncteur (607), une commande (608) de report de la deuxième information est envoyée sur la sortie de commande, et
- lorsque la première information est représentative d'une fermeture ultérieure des contacts principaux dudit disjoncteur (609), ladite sortie de commande est initialisée (610).

26. Procédé selon la revendication 25, **caractérisé en ce que**, dans la configuration (SDX) de report de défaut avec initialisation par changement d'état du disjoncteur, la deuxième information est représentative d'un défaut électrique du type thermique (SDT) et/ou du type différentiel (SDV).

## Patentansprüche

1. Hilfseinrichtung (1; 201; 304; 402) zur Informationsübertragung für einen Leistungsschalter (301), welche Einrichtung Verarbeitungsmittel (5; 51; 202) umfasst, die
- einen ersten Eingang (33; 57; 207), der dazu dient, in mindestens einer Konfiguration eine erste Information zu empfangen (606), die einen Schaltzustand (O, F) des genannten Leistungsschalters abbildet, sowie
- mindestens einen Steuerausgang (7, 8; 58, 59; 213, 214) zur Steuerung der Informationsübertragung umfasst,
**dadurch gekennzeichnet, dass** die Verarbeitungsmittel
- einen zweiten Eingang (6; 55; 206) zum Empfang mindestens einer zweiten Information, die einen elektrischen Fehler oder einen Steuerbefehl abbildet,
- an den zweiten Eingang angeschlossene Erkennungsmittel (31; 56) zur Erkennung (605) des elektrischen Fehlers (SD, SDT, SDV) in der zweiten Information sowie
- Initialisierungsmittel (34; 60) umfasst, um den mindestens einfach vorhandenen Steuerausgang zu initialisieren und in der genannten Konfiguration die Übertragung der ersten, einen Schaltzustand (O, F) des genannten Leistungsschalters abbildenden Information in Abhängigkeit von der ersten Information und von der zweiten Information zu steuern (610).

2. Einrichtung nach Anspruch 1, **dadurch gekennzeichnet, dass** die Erkennungsmittel (31; 56) wahlweise die Erkennung eines elektrischen Fehlers folgenden Typs erlauben:
- elektrische Fehler, die eine Abschaltung der Hauptkontakte des Leistungsschalters bewirken, und/oder
- elektrische Fehler, die keine Abschaltung der Hauptkontakte des Leistungsschalters bewirken.

3. Einrichtung nach Anspruch 2, **dadurch gekennzeichnet, dass** die eine Abschaltung der Hauptkontakte des Leistungsschalters bewirkenden elektrischen Fehler folgende Fehlertypen umfassen:
- thermische Überlast oder Differenzstromfehler (SD),
- thermische Überlast (SDT),
- Differenzstromfehler (SDV).

4. Einrichtung nach Anspruch 2, **dadurch gekennzeichnet, dass** die keine Abschaltung der Hauptkontakte des Leistungsschalters bewirkenden elektrischen Fehler folgende Fehlertypen umfassen:
- alle Abweichungen der Frequenz von einem Referenzwert,
- alle Abweichungen der Spannung von einem Referenzwert,
- alle Störungen in der Messkette.

5. Einrichtung nach einem der Ansprüche 1 bis 4, **dadurch gekennzeichnet, dass** die Signale mit der zweiten Information als Block (101) mit einem Impuls (102; 112; 122; 127) vorliegen, dessen Dauer (T1) die in den genannten Signalen enthaltenen Informationen abbildet.

6. Einrichtung nach einem der Ansprüche 1 bis 5, **dadurch gekennzeichnet, dass** die Verarbeitungsmittel (5; 51; 202) einen Konfigurationseingang (32) umfassen.

7. Einrichtung nach einem der Ansprüche 1 bis 6, **dadurch gekennzeichnet, dass** in einer Fehlermeldekonfiguration (SDX) mit Initialisierung durch Änderung des Schaltzustands des Leistungsschalters die Verarbeitungsmittel folgendes erlauben:
- Steuerung der Übertragung der zweiten Information (608), wenn die zweite Information einen elektrischen Fehler entsprechend eines Fehlertyps abbildet, der eine Abschaltung der Hauptkontakte des Leistungsschalters (607) bewirkt, und
- Initialisierung des mindestens einfach vorhandenen Steuerausgangs (610), wenn die erste Information ein nachfolgendes Einschalten der Hauptkontakte des genannten Leistungsschalters (609) abbildet.

8. Einrichtung nach Anspruch 7, **dadurch gekennzeichnet, dass** in der Fehlermeldekonfiguration (SDX) mit Initialisierung durch Änderung des Schaltzustands des Leistungsschalters die zweite Information einen elektrischen Fehler vom Typ thermische Überlast (SDT) und/oder Differenzstromfehler (SDV) abbildet.

9. Einrichtung nach einem der Ansprüche 7 oder 8, **dadurch gekennzeichnet, dass** sie zwei Steuerausgänge (13; 15) zur Steuerung des Informationsübertragung an zwei elektronische Kontakte (18; 19) umfasst, die eine differenzierte Übertragung einer Information, welche einen elektrischen Fehler vom Typ thermische Überlast (SDT) bzw. einer Information, welche einen elektrischen Fehler vom Typ Differenzstromfehler (SDV) abbildet.

10. Einrichtung nach einem der Ansprüche 7 bis 9, **dadurch gekennzeichnet, dass** die Verarbeitungsmittel (5; 51) den Initialisierungsmitteln (60) zugeordnete Zeitverzögerungsmittel (61) umfassen, um die Initialisierung (610) freizugeben, wenn die zwischen der Übertragung der zweiten Information und dem Einschalten der Hauptkontakte verstrichene Zeit kürzer als eine festgelegte Verzögerungszeit ist.

11. Einrichtung nach Anspruch 10, **dadurch gekennzeichnet, dass** die Verzögerungszeit zwischen 300 und 700 ms beträgt.

12. Einrichtung nach einem der Ansprüche 1 bis 6, **dadurch gekennzeichnet, dass** in einer Fehlermeldekonfiguration (M2C) mit Initialisierung durch den Auslöser des genannten Leistungsschalters die Verarbeitungsmittel folgendes erlauben:
- Steuerung der Übertragung der zweiten Information, wenn die zweite Information einen elektrischen Fehler abbildet, und
- Initialisierung des mindestens einfach vorhandenen Steuerausgangs, wenn die zweite Information einen Initialisierungs-Steuerbefehl abbildet.

13. Einrichtung nach einem der Ansprüche 1 bis 6, **dadurch gekennzeichnet, dass** in einer Steuerbefehlskonfiguration (SDTAM) mit Ansteuerung eines angebauten Hilfsschalters die Verarbeitungsmittel folgendes erlauben:
- Steuerung der Übertragung der zweiten Information, wenn die zweite Information einen Steuerbefehl zur Abschaltung eines angebauten Hilfsschalters abbildet, und
- Initialisierung des mindestens einfach vorhandenen Steuerausgangs, wenn die zweite Information einen Initialisierungs-Steuerbefehl abbildet.

14. Einrichtung nach Anspruch 13, **dadurch gekennzeichnet, dass** der Initialisierungs-Steuerbefehl zeitverzögert ist.

15. Einrichtung nach einem der Ansprüche 13 oder 14, **dadurch gekennzeichnet, dass** die Einrichtung Mittel (62) zur Einstellung der Zeitverzögerung des Steuerbefehls zur Abschaltung des angebauten Hilfsschalters umfasst.

16. Einrichtung nach Anspruch 15, **dadurch gekennzeichnet, dass** der erste Eingang (57) an die Einstellmittel (62) angeschlossen ist, um eine die Zeitverzögerung abbildende Information zu empfangen.

17. Einrichtung nach einem der Ansprüche 1 bis 16, **dadurch gekennzeichnet, dass** die Einrichtung Verbindungsmittel (4; 205; 303; 405) zur Verbindung mit einem Auslöser (3; 302) des genannten Leistungsschalters umfasst, die dazu dienen, Signale mit der darin enthaltenen, einen elektrischen Fehler oder einen Steuerbefehl abbildenden zweiten Information zu empfangen, wobei der zweite Eingang (6; 55; 206) an die genannten Verbindungsmittel angeschlossen ist.

18. Einrichtung nach Anspruch 17, **dadurch gekennzeichnet, dass** die Verbindungsmittel (4; 205; 303; 405) einen Optokoppler sowie hermetisch verschlossene Schutzmittel umfassen.

19. Einrichtung nach einem der Ansprüche 1 bis 18, **dadurch gekennzeichnet, dass** sie an den mindestens einfach vorhandenen Steuerausgang angeschlossene Umschaltmittel (9, 11; 221, 222) umfasst, um mindestens einen elektronischen Kontakt (18, 19; 223, 224; 307, 308; 407, 408; 503, 504) zu schalten und mindestens eine der genannten Informationen an den genannten Kontakt zu übertragen.

20. Hilfsschaltung eines Leistungsschalters, **dadurch gekennzeichnet, dass** sie
- eine Hilfseinrichtung (1; 201) nach einem der Ansprüche 1 bis 19 und
- von der genannten Hilfseinrichtung getrennte und mit dem ersten Eingang (33; 207) dieser Einrichtung verbundene Mittel zur Übertragung des Schaltzustands des Leistungsschalters umfasst.

21. Hilfsschaltung nach Anspruch 20, **dadurch gekennzeichnet, dass** die Schaltzustands-Übertragungsmittel einen elektrischen Kontakt (413) umfassen, der durch einen Mechanismus (412) des Leistungsschalters angesteuert wird.

22. Hilfsschaltung nach einem der Ansprüche 20 oder 21, **dadurch gekennzeichnet, dass** die Mittel zur Übertragung des Schaltzustands des Leistungsschalters in einem mit den elektronischen Kontakten der genannten Hilfseinrichtung verbundenen Anschlussklemmenblock (306; 412; 501) angeordnet sind.

23. Leistungsschalter (301) mit
- einem elektronischen Auslöser (302) zur Ansteuerung der Abschaltung der Hauptkontakte des genannten Leistungsschalters nach Auftreten mindestens eines elektrischen Fehlers sowie
- einer mit dem genannten elektronischen Auslöser verbundenen Hilfsschaltung (304; 306), **dadurch gekennzeichnet, dass** die genannte Hilfsschaltung gemäß einem der Ansprüche 20 bis 22 ausgeführt ist und über Verbindungsmittel (303) der Hilfseinrichtung zur Informationsübertragung der genannten Hilfsschaltung mit dem Auslöser verbunden ist.

24. Verfahren zur Informationsübertragung für einen Leistungsschalter mit:
- einem Leseschritt (606), um in mindestens einer Konfiguration eine erste Information einzulesen, die einen Schaltzustand (O, F) des genannten Leistungsschalters abbildet, sowie
- einem Steuerschritt (608) zur Steuerung der Übertragung einer Information, **dadurch gekennzeichnet, dass** die Verarbeitungsmittel
- einen Leseschritt (604) zum Empfang mindestens einer zweiten Information, die einen elektrischen Fehler oder einen Steuerbefehl abbildet,
- einen Erkennungsschritt (605) zur Erkennung eines elektrischen Fehlers (SD, SDT, SDV) in der zweiten Information und
- einen Initialisierungsschritt (610) umfasst, um in der genannten Konfiguration die Übertragung der ersten, einen Schaltzustand (O, F) des genannten Leistungsschalters abbildenden Information in Abhängigkeit von der ersten Information und von der zweiten Information zu steuern.

25. Verfahren nach Anspruch 24, **dadurch gekennzeichnet, dass** in der Fehlermeldekonfiguration (SDX) mit Initialisierung durch Änderung des Schaltzustands des Leistungsschalters
- ein Steuerbefehl zur Übertragung der zweiten Information an den Steuerausgang ausgegeben (608) wird, wenn die zweite Information einen elektrischen Fehler entsprechend eines Fehlertyps abbildet, der eine Abschaltung der Hauptkontakte des Leistungsschalters (607) bewirkt, bzw.
- der genannte Steuerausgang initialisiert wird (610), wenn die erste Information ein nachfolgendes Einschalten der Hauptkontakte des genannten Leistungsschalters (609) abbildet.

26. Verfahren nach Anspruch 25, **dadurch gekennzeichnet, dass** in der Fehlermeldekonfiguration (SDX) mit Initialisierung durch Änderung des Schaltzustands des Leistungsschalters die zweite Information einen elektrischen Fehler vom Typ thermische Überlast (SDT) und/oder Differenzstromfehler (SDV) abbildet.

## Claims

1. Auxiliary device (1;201;304;402) for transferring information for a circuit breaker (301), said device including processing means (5;51;202) comprising:
- a first input (33;57;207) to receive (606), in at least one configuration, a first item of information representing a state (O,F) of said circuit breaker, and
- at least one control output (7,8;58,59;213,214) to control the transfer of an item of information,
**characterized in that** the processing means include:
- a second input (6;55;206) to receive at least one second item of information representing an electrical fault or an auxiliary control,
- identification means (31 ;56) connected to the second input to identify (605) the electrical fault (SD,SDT,SDV) in the second item of information, and
- means (34;60) for initializing the at least one control output to control (610), in said configuration, the transfer of the first item of information representing a state (O,F) of said circuit breaker as a function of the first item of information and of the second item of information.

2. Device according to Claim 1, **characterized in that** the identification means (31 ;56) make it possible to identify an electrical fault chosen from among:
- electrical faults generating the opening of main contacts of the circuit breaker, and/or
- electrical faults not generating the opening of the main contacts of the circuit breaker.

3. Device according to Claim 2, **characterized in that** the electrical faults generating the opening of main contacts of the circuit breaker comprise:
- faults of thermal or differential type (SD)
- faults of thermal type (SDT), and
- faults of differential type (SDV).

4. Device according to Claim 2, **characterized in that** the electrical faults not generating the opening of main contacts of the circuit breaker comprise:
- any variation of the frequency with respect to a reference,
- any variation of voltage with respect to a reference, and
- any failure in the measurement chain.

5. Device according to one of Claims 1 to 4, **characterized in that** the signals carrying the second item of information appear in the form of a frame (101) including a pulse (102;112;122;127), the duration (T1) of which represents the information carried by said signals.

6. Device according to one of Claims 1 to 5, **characterized in that** the processing means (5;51;202) include a configuration input (32).

7. Device according to one of Claims 1 to 6, **characterized in that**, in a default transfer configuration (SDX) with initialization by change of state of the circuit breaker, the processing means enable:
- control of the transfer of the second item of information (608), when the second item of information represents an electrical fault corresponding to a fault generating an opening of the main contacts of the circuit breaker (607), and
- initialization of the at least one control output (610), when the first item of information represents a subsequent closing of the main contacts of said circuit breaker (609).

8. Device according to Claim 7, **characterized in that**, in the default transfer configuration (SDX) with initialization by change of state of the circuit breaker, the second item of information represents an electrical fault of the thermal type (SDT) and/or of the differential type (SDV).

9. Device according to one of Claims 7 or 8, **characterized in that** it includes two control outputs (13;15) to control the transfer of information to two static contacts (18;19) making it possible to transfer an item of information representing an electrical fault of thermal type (SDT) and an item of information representing an electrical fault of differential type (SDV) separately.

10. Device according to one of Claims 7 to 9, **characterized in that** the processing means (5;51) include timeout means (61) associated with the initializing means (60) to authorize the initialization (610) when the time elapsed between the transfer of the second item of information and the closing of the main contacts is less than a predetermined timeout period.

11. Device according to Claim 10, **characterized in that** the timeout period is between 300 and 700 ms.

12. Device according to one of Claims 1 to 6, **characterized in that**, in a default transfer configuration (M2C) with initialization by way of the tripping device of said circuit breaker, the processing means enable:
- control of the transfer of the second item of information, when the second item of information represents an electrical fault, and
- initialization of the at least one control output, when the second item of information represents an auxiliary initialization control.

13. Device according to one of Claims 1 to 6, **characterized in that**, in a configuration (SDTAM) for auxiliary control of an appended switch, the processing means enable:
- control of the transfer of the second item of information, when the second item of information represents an auxiliary control for opening an appended switch, and
- initialization of the at least one control output, when the second item of information represents an auxiliary initialization control.

14. Device according to Claim 13, **characterized in that** the auxiliary initialization control has a timeout.

15. Device according to one of Claims 13 or 14, **characterized in that** it includes means (62) for adjusting the timeout of the auxiliary control for opening an appended switch.

16. Device according to Claim 15, **characterized in that** the first input (57) is connected to the adjusting means (62) to receive an item of information representing the timeout.

17. Device according to one of Claims 1 to 16, **characterized in that** it includes coupling means (4;205;303;405) with a tripping device (3;302) for said circuit breaker in order to receive signals carrying the second item of information representing an electrical fault or an auxiliary control, the second input (6;55;206) being connected to said coupling means.

18. Device according to Claim 17, **characterized in that** the coupling means (4;205;303;405) include an optical coupler and airtight protecting means.

19. Device according to one of Claims 1 to 18, **characterized in that** it includes switching means (9,11;221,222) connected to the at least one control output to switch at least one static contact (18,19;223,224;307,308;407,408;503,504) and to transfer to said contact at least one of said items of information.

20. Auxiliary assembly of an electrical circuit breaker, **characterized in that** it includes:
- an auxiliary device (1;201) according to one of Claims 1 to 19, and
- means for transferring the state of the circuit breaker, which are separate from said auxiliary device and coupled to the first input (33;207) of the latter.

21. Auxiliary assembly according to Claim 20, **characterized in that** the means for transferring the state include an electrical contact (413) actuated by a mechanism (412) of the circuit breaker.

22. Auxiliary assembly according to one of Claims 20 or 21, **characterized in that** the means for transferring the state of the circuit breaker are arranged in a block of electrical terminals (306;412;501) connected to the static contacts of said auxiliary device.

23. Electrical switch (301) including:
- an electronic tripping device (302) for tripping the opening of main contacts of said circuit breaker in response to at least one type of electrical fault, and
- an auxiliary assembly (304;306) coupled to said electronic tripping device, **characterized in that** said auxiliary assembly is according to Claims 20 to 22, and **in that** it is coupled to the tripping device by way of the coupling means (303) of the auxiliary device for transferring information from said auxiliary assembly.

24. Method for transferring information for the circuit breaker including:
- a step (606) of reading, in at least one configuration, a first item of information representing a state (O,F) of said circuit breaker, and
- a control step (608) to control the transfer of an item of information,
**characterized in that** the processing means include:
- a reading step (604) to receive at least one second item of information representing an electrical fault or an auxiliary control,
- an identifying step (605) to identify an electrical fault (SD,SDT,SDV) in the second item of information, and
- an initializing step (610) to control, in said configuration, the transfer of the first item of information representing a state (O,F) of said circuit breaker as a function of the first item of information and of the second item of information.

25. Method according to Claim 24, **characterized in that**, in the default transfer configuration (SDX) with initialization by change of state of the circuit breaker,
- when the second item of information represents an electrical fault corresponding to a fault generating an opening of the main contacts of the circuit breaker (607), a control (608) to transfer the second item of information is sent to the control output, and
- when the first item of information represents a subsequent closing of the main contacts of said circuit breaker (609), said control output is initialized (610).

26. Method according to Claim 25, **characterized in that**, in the default transfer configuration (SDX) with initialization by change of state of the circuit breaker, the second item of information represents an electrical fault of the thermal type (SDT) and/or of the differential type (SDV).
